# EUROPÄISCHE PATENTSCHRIFT

(11) **EP 3 849 318 B1**
(45) Veröffentlichungstag und Bekanntmachung des Hinweises auf die Patenterteilung: **18.02.2026**
(21) Anmeldenummer: 19772644.1
(22) Anmeldetag: 11.09.2019
(51) Int. Cl.: A21C 3/02

(54) **TEIGBANDFORMORGAN MIT SCHNEIDEEINRICHTUNG**
DOUGH BAND FORMING MEANS WITH CUTTING DEVICE
DISPOSITIF DE FORMATION D'UNE BANDE DE PÂTE AVEC DISPOSITIF DE COUPE

(30) Priorität: 11.09.2018 AT 507712018
(43) Veröffentlichungstag der Anmeldung: 21.07.2021
(73) Patentinhaber: KÖNIG MASCHINEN GESELLSCHAFT M.B.H., 8045 Graz (AT)
(72) Erfinder: RAUCH, Eduard, 8321 St. Margarethen (AT); RADL, Markus, 8280 Fürstenfeld (AT)
(74) Vertreter: Wildhack & Jellinek Patentanwälte GmbH
(86) Internationale Anmeldenummer: PCT/AT2019/060294
(87) Internationale Veröffentlichungsnummer: WO 2020/051611

(56) Entgegenhaltungen:
- WO-A1-01/08497
- CN-A- 104 543 766
- DE-A1- 102011 007 294
- JP-A- H11 127 763
- JP-U- S54 124 093
- US-A1- 2005 170 031
- US-B1- 6 524 090

## Beschreibung

Die vorliegende Erfindung betrifft eine Vorrichtung zum Formen mehrerer Teigbandstreifen gemäß dem Oberbegriff des Patentanspruchs 1.

Aus dem Stand der Technik sind Teigbandformorgane für die Formgebung von Teigcargen zu Teigbändern weit verbreitet. Die aus dem Stand der Technik bekannten Systeme bestehen meist aus Zuführvorrichtungen, Vorportioniereinrichtungen welche die Teigcharge für eine Umformung, zerkleinern und Teigbandformeinheiten.

Eine solche Vorrichtung ist beispielsweise in US 2005/170031 gezeigt.

Diese Teigbandformer bestehen aus mindestens zwei oder mehrere Walzen oder Rollen mit gleichen oder unterschiedlichen Durchmessern. Die Walzen können auch mit unterschiedlichen Oberflächen oder Profilen ausgeführt sein. Die Länge der Walzen ist meist bestimmend für die zu erzeugenden Breite der Teigbänder. Für Gebäcke werden diese Teigbänder je nach Produkt in der Länge und Breite ein bis mehrfach geteilt.

Das Schneiden eines Teigbandes ist beispielsweise in DE 10 2011 007294 erwähnt.

Für das Längsschneiden, also die Teilung des Teigbandes in mehrere Teigbandstreifen entlang dessen Breite, sind zwei Verfahren bekannt. Zum einen werden die Ränder des Teigbandes beschnitten, wodurch ein erheblicher Teil des Teigbandes als Abfall anfällt und zweitens, der Beschnitt des Teigbandes ohne Randabschnitt, dies hat den Vorteil, dass kein Randabfall anfällt wodurch bis zu 15 % der zu verarbeiteten Masse eingespart wird.

Bei den bekannten Vorrichtungen und Verfahren zum Beschneiden des Teigbandes mit Randabschnitt wird das Teigband in dem Teigbandformer erzeugt und nach Verlassen des Teigbandformers oder an anderen Stellen der Teigbandanlage wird dieses entsprechend der Form in der Länge zu ein oder mehreren Streifen bzw. Teigbandstreifen geschnitten. Dies erfolgt mit Scheibenmesser, Stanzformen, Wasserstrahl usw. Um gleichmäßige Teigbandstreifen zu erhalten wird bei derartigen Systemen ein gewisser Rand (min. 10 - 15 %) abgeschnitten.

Bei den bekannten Vorrichtungen und Verfahren zum Beschneiden des Teigbandes ohne Randabschnitt wird das Teigband in dem Teigbandformer erzeugt und nach Verlassen des Teigbandformers oder an anderen Stellen der Teigbandanlage geschnitten, dabei ist es erforderlich, um gleiche Querschnitte zu erhalten, das Teilen in Flussrichtung in einer sogenannten "Kalibriereinheit" durchzuführen. Um den Querschnitt gleich zu halten, erfordert dies in der Kalibriereinheit aufwendige Seitenführungen, welche sich, um nicht mit Teig zu verkleben, mitbewegen oder mit Trennmittel versehen werden müssen. Nachteil, der aus dem Stand der Technik bekannten Systeme ist es also, das ein großer Randabschnitt des Teiges anfällt und/oder stets ein weiteres Modul bzw. eine weitere Station in Teigbandanlagen benötigt wird, was den Aufwand, die Wartung, Reinigung und Kosten deutlich erhöht.

Aufgabe der Erfindung ist es daher eine Vorrichtung bereitzustellen die Längsschnitte des Teigbandes ermöglicht, die kostengünstig und einfach durchzuführen sind, eine hohe Genauigkeit im Schnitt der Teigbandstreifen erlaubt und eine geringen oder keinen Abfall von Teig bewirkt.

Diese Aufgabe wird durch die kennzeichnenden Merkmale des Patentanspruchs 1 gelöst.

Die Erfindung ist eine Vorrichtung gemäß Anspruch 1.

Durch die erfindungsgemäße Vorrichtung ist es möglich die Längsschnitte direkt in der Teigbandkalibriereinheit bzw. im Teigbandformer durchzuführen, was weiter Stationen innerhalb der Teigbandanlage überflüssig macht und auch die Länge der Teigbandanlage und den von dieser benötigten Platz reduziert. Es wird kein Randabschnitt also kein Abfall bewirkt, wodurch der Gewinn erhöht und keine Lebensmittel verschwendet werden. Weiters wird das Teigband durch die Schneidwalze und die Austragswalze sowie die Seitenabdeckungen während des Schnitts von vier Seiten geführt, was eine gleichmäßige Form und Breite und damit eine hohe Genauigkeit der Teigbandstreifen bewirkt. Durch die oszillierende Verschwenkbewegung des Schwenkhebels im Teigbandproduktionsprozess wird die Teigqualität des Teigbandes verbessert und die Qualität der Schnitte des Teigbandes zu Teigbandsträngen verbessert

Besonders vorteilhafte Ausführungsformen der Vorrichtung werden durch die Merkmale der abhängigen Ansprüche näher definiert:
Eine verbesserte Qualität des Schnittes wird erreicht, indem die Austragswalze als Gegenwalze für die Schneidwalze ausgebildet ist, wobei die Schneidmesser der Schneidwalze sich bis zur Austragswalze erstrecken, wobei die Schneidmesser insbesondere eine größere Schnitttiefe als das geformte Teigband aufweisen, sodass das Teigband zwischen der Austragswalze und der Schneidwalze keine Verformung erfährt.

Die Dicke des Teigbandes kann vorteilhaft eingestellt werden, wenn die Vorrichtung eine Schwenkvorrichtung umfasst, wobei alle Formwalzen, die jeweils auf einer gemeinsamen Seite der Teigkammer in Bezug auf die Dicke des Teigbandes gesehen auf der gleichen Seite angeordnet sind, und/oder die Austragswalze mit der Schwenkvorrichtung verbunden sind und mittels der Schwenkvorrichtung in Richtung der Dicke des Teigbandes verschwenkbar sind, wobei der Abstand der Achsen der Formwalzen und/oder der Austragswalze die mit der Schwenkvorrichtung verbunden sind zu den Achsen zumindest einer, insbesondere aller, der jeweils anderen nicht mit der Schwenkvorrichtung verbundenen Formwalze und/oder der Austragswalze verstellbar ist und derart die Dicke des Teigbandes veränderbar und/oder vorgebbar ist.

Der Abstand zwischen den Reihen der Formwalzen und die Dicke des Teigbandes kann vorteilhaft eingestellt werden, wenn die Schwenkvorrichtung zwei parallel zueinander angeordneten Schwenkhebel, umfasst, wobei der Schwenkhebel um eine Schwenkachse, insbesondere mittels eines Hydraulik- oder Pneumatikzylinders oder elektromechanisch, verschwenkbar ist, und wobei die Lagerung einer Anzahl der Formwalzen, insbesondere aller Formwalzen, die jeweils auf einer gemeinsamen Seite der Teigkammer in Bezug auf die Dicke des Teigbandes gesehen auf der gleichen Seite angeordnet sind, und/oder die Austragswalze in den beiden Schwenkhebeln, angeordnet sind, wobei bei Verschwenken des Schwenkhebels der Abstand der Achsen der Formwalzen, die in dem Schwenkhebel gelagert sind und/oder der Austragswalze zu den jeweils anderen nicht im Schwenkhebel gelagerten Formwalzen verstellbar und/oder einstellbar ist.

Vorteilhaft kann vorgesehen sein, dass die Vorrichtung, insbesondere die Schwenkvorrichtung, einen, insbesondere hydraulischen oder pneumatischen oder elektrischen oder elektromechanischen, Schwenkantrieb aufweist, wobei der Schwenkantrieb derart angeordnet und ausgebildet ist, dass eine Anzahl der Formwalzen, insbesondere alle Formwalzen die jeweils auf einer gemeinsamen Seite der Teigkammer in Bezug auf die Dicke des Teigbandes gesehen auf der gleichen Seite angeordnet sind, und/oder die Austragswalze in Richtung der Dicke des Teigbandes oszillierend um einen Nullpunkt antreibbar sind, sodass der Abstand der Achsen der Formwalzen und/oder der Austragswalze die von dem Schwenkantrieb oszillierend bewegbar sind zu den Achsen zumindest einer, insbesondere aller, der jeweils anderen, nicht durch den Schwenkantrieb antreibbaren Formwalzen und/oder zu der Achse der Austragswalze im Teigproduktionsprozesses oszillierend um einen vorgegeben Abstand verstellt werden. Durch die Oszillationsbewegung der einzelnen Walzen wird die Teigqualität verbessert und ein homogeneres Teigband erzeugt, wodurch die Gewichtstoleranz der Teiglinge wesentlich reduziert wird. Weiters wird das Ablösen des Teiges von den einzelnen Walzen erleichtert.

Der Abstand der Formwalzen zueinander kann alternativ einfach verändert werden, wenn wobei die Schwenkvorrichtung ein längenverstellbares Stellelement, insbesondere einen Hydraulik- oder Pneumatikzylinder oder elektromechanische Aktoren, umfasst.,
Durch die Verstellung mittels des Stellelements ist ein breiter Verstellabstand möglich. Die seitliche Wandung bzw. der Deckel der Vorrichtung kann aufgeklappt werden und die Formwalzen dann in dem aufgeklappten Zustand einfach entnommen und gereinigt werden.

Um die Schneidwalzen einfach wechseln und verstellen zu können, kann vorgesehen sein, dass die Schneidwalze auf einer Verstellvorrichtung angeordnet ist, wobei der Abstand und/oder die Anpresskraft der Schneidwalze an die Austragswalze mittels der Verstellvorrichtung einstellbar ist, wobei die Verstellvorrichtung insbesondere als um eine Achse verstellbarer Schwenkarm ausgebildet ist an dem die Schneidwalze angeordnet ist.

Die Seitenkanten der geschnittenen Teigbandstreifen wird verbessert, indem die Austragswalze und/oder die Schneidwalze zwei Seitenwandungen aufweist, die jeweils im Bereich des Endes der Austragswalze und/oder der Schneidwalze angeordnet sind, wobei die Seitenwandungen derart angeordnet und ausgebildet sind, dass beim Schnitt des Teigbandes mit der Schneidwalze Verformungen und ein Ablenken des Teigbandes verhindert wird.

Um ein Anhaften des Teiges zu verhindern, kann vorgesehen sein, dass die Vorrichtung eine Anzahl vom Abstreifern umfasst, wobei die Abstreifer jeweils am Umfang einer Formwalze anliegen, wobei Teig vom Umfang der jeweiligen Formwalze mittels der Abstreifer abhebbar ist oder dass die Vorrichtung eine Anzahl Bemehlungsvorrichtungen und/oder eine Anzahl von Sprühelementen umfasst, wobei Bemehlungsvorrichtungen und/oder die Sprühelemente derart in der Vorrichtung angeordnet sind, dass ein Anhaften von Teig an den mit Teig in Kontakt befindlichen Oberflächen der Vorrichtung verhinderbar ist.

Um ungewollte Druckbelastungen und ein Überlaufen der Teigzufuhrvorrichtung zu verhindern kann vorgesehen sein, dass die Teigzufuhreinrichtung einen Fülltrichter und zumindest einen Füllstandssensor umfasst, wobei der Füllstand der Teigzufuhreinrichtung, insbesondere des Fülltrichters, mittels des Füllstandsensors erfassbar ist.

Vorteilhaft kann vorgesehen sein, dass die Vorrichtung eine Anzahl von Antrieben umfasst, wobei die Formwalzen und/oder die Austragswalze jeweils gemeinsam oder separat, vorzugsweise mit unterschiedlichen Drehzahlen, antreibbar sind, oder dass die Vorrichtung zwei Antriebe umfasst wobei jeweils die Formwalzen, die jeweils auf einer gemeinsamen Seite der Teigkammer in Bezug auf die Dicke des Teigbandes gesehen auf der gleichen Seite angeordnet sind, jeweils mit einem der beiden Antriebe gemeinsam angetrieben werden und insbesondere über Getriebe miteinander verbunden sind.

Eine bevorzugte Ausbildung der Vorrichtung wird erreicht, indem die Formwalzen und/oder die Austragswalze und/oder die Schneidwalze eine unterschiedliche Profilierung aufweisen, wobei insbesondere die Formwalzen einen profilierten Umfang aufweisen und die Austragswalze und die Schneidwalze glatt ausgebildet sind.

Um die Schneidwalze und oder die Messer einfach reinigen und tauschen zu können, kann vorgesehen sein, dass die Schneidwalze auswechselbar an der Vorrichtung angeordnet ist.

Um die Dicke des durch die Vorrichtung produzierten Teigbandes automatisch und/oder abhängig von der Teigzufuhr einstellen zu können, kann vorgesehen sein, dass das Stellelement, insbesondere der Hydraulik- oder Pneumatikzylinder oder die Linearelemente oder das Spindelgetriebe, eine Sensorik aufweist, mit der die aktuelle Länge des Stellements erfassbar ist, wobei insbesondere durch die Sensorik die Länge des Stellelements und damit die Dicke des Teigbandes anhand zuvor ermittelter oder eingegebenen Gewichte der Teiglinge einstellbar ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:
Fig. 1 zeigt eine erste Ausführungsform einer erfindungsgemäßen Vorrichtung in Schnittansicht,
Fig. 2 zeigt eine Ausführungsform der Vorrichtung mit sechs Walzen,
Fig. 3 zeigt eine weitere Ausführungsform der erfindungsgemäßen Vorrichtung mit Teigzufuhreinrichtung,
Fig. 4 zeigt eine Ansicht der Vorrichtung in von Hinten gesehen gemäß Fig. 3,
Fig. 5 zeigt eine alternative Ausführungsform der Erfindung mit geringer eingestellter Teigbanddicke,
Fig. 6 zeigt eine Detailansicht des Exzenters der Oszillationseinheit und
Fig. 7 zeigt eine Seitenansicht der Vorrichtung mit großer eingestellter Teigbanddicke.

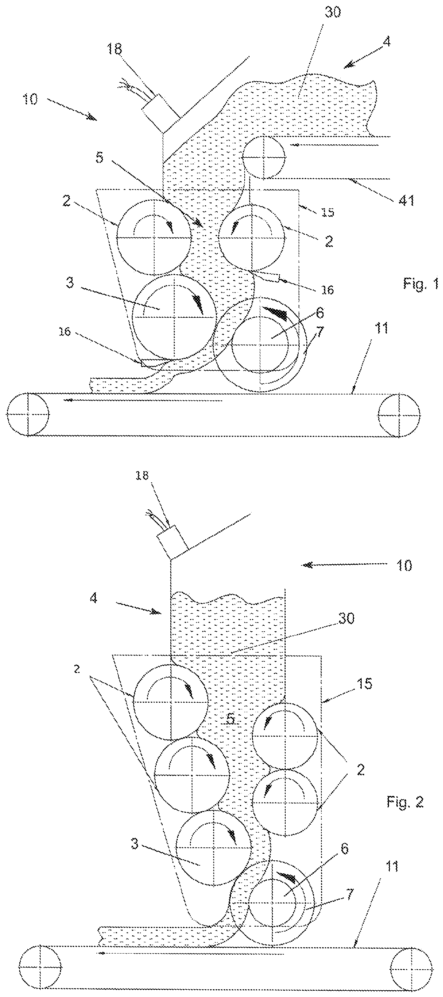

In Fig. 1 ist eine Ausführungsform der Vorrichtung 10 zum Formen mehrere Teigbandstreifen in einer vereinfachten Schnittansicht dargestellt. Die Vorrichtung 10 umfasst vier, durch einen Antrieb 21 jeweils um Ihre Achsen drehbare Walzen, zwei Formwalzen 2, eine Austragswalze 3 und eine Schneidwalze 6. Teig 30 wird durch eine Teigzufuhreinrichtung 4 mittels eines Förderbandes 41 in Flussrichtung des Teiges ober die beiden ersten Formwalzen 2 gefördert.

Die Achsen der Formwalzen 2 und der Austragswalze 3 sind parallel in einem Abstand zueinander angeordnet und bilden zwischen den Formwalzen 2 und der Austragswalze 3 eine Teigkammer 5 aus in der der Teig 30 gewirkt und zu einem Teigband produziert wird. Die Vorrichtung 10 umfasst weiters zwei Seitenabdeckungen 15 auf, die an den Stirnseiten der Formwalzen 2 und der Austragswalze 3 anliegen und die Teigkammer 5 seitlich begrenzen und gegen die Umgebung abdichten. Der Teig 30 wird durch die gegengleiche Drehung der ersten zwei Formwalzen 2 in die Teigkammer 5 eingezogen, zwischen den Formwalzen 2 gewirkt, eventuelle Teigteile vergleichmäßigt und so ein kontinuierliches endloses Teigband produziert.

Die Vorrichtung 10 umfasst eine Schneidwalze 6, die innerhalb der Teigkammer 5 an deren Ausgang angeordnet ist. Die Achse der Schneidwalze 6 ist parallel zu den Achsen der Formwalzen 2 und der Austragswalze 3 angeordnet. Die Schneidwalze 6 weist eine Anzahl von scheibenförmigen Schneidmessern 7 auf, die sich vom Umfang der Schneidwalze 6 in Richtung der Austragswalze 3 bis zu deren Umfang erstrecken. Das Teigband wird zwischen der Austragswalze und der Schneidwalze 6 aus der Teigkammer 5 ausgebracht, wobei das Teigband entsprechend der Anzahl der Schneidmesser 7 in eine Anzahl vom Teigbandstreifen geschnitten wird. Die Breite der Teigbandstreifen wird durch den Abstand zwischen den Schneidmessern 7 und dem Abstand der auf der Schneidwalze 6 in Längsrichtung der Stirnseiten der Schneidwalze 6 nahe gelegenen Schneidmessern 7 vorgegeben. Die Dicke des Teigbandes wird bei der in Fig. 1 gezeigten Ausführungsform durch den Abstand der Austragswalze 3 mit der Schneidwalze 6 vorgegeben. Die Austragswalze 3 bildet bei dieser Ausführungsform eine Gegenwalze für die Schneidwalze 6, an der die Schneidmesser 7 mit Druck anliegen.

Am Ausgang der Teigkammer 5 werden die durch die Schneidwalze 6 geschnitten Teigstreifen von einer Teigabfuhrvorrichtung 11, die als Transportband ausgebildet ist aus der Vorrichtung 10 ausgebracht und zur weiteren Verarbeitung in der Teigbandanlage transportiert.

In Fig. 2 ist eine weitere Ausführungsform der erfindungsgemäßen Vorrichtung 10 in einer schematischen Schnittansicht dargestellt. Die Vorrichtung 10 umfasst vier Formwalzen 2. Der Teig 30 wird durch die Teigzufuhreinrichtung 4 über einen Teigtrichter durch die Schwerkraft zu den ersten beiden Formwalzen 2 befördert und zwischen diesen in die Teigkammer 5 eingezogen. Zwischen den Formwalzen 2 kann das Teigband je nach Teigart gewirkt und vergleichmäßigt werden und als Teigband mit definierter Dicke zwischen der letzten Formwalze 2, also der dem Ausgang der Teigkammer 5 am nächsten gelegenen, und der Austragswalze 3 geformt. Das derart geformte Teigband wird dann zwischen der Austragswalze 3 und der Schneidwalze 6 in Teigbandstreifen mit definierter Breite geschnitten und aus der Vorrichtung 10 mit einer Teigabfuhrvorrichtung 11 ausgebracht. Das Teigband wird bei dieser Ausführungsform zwischen der Schneidwalze 6 und der Austragswalze 3 nicht mehr verformt.

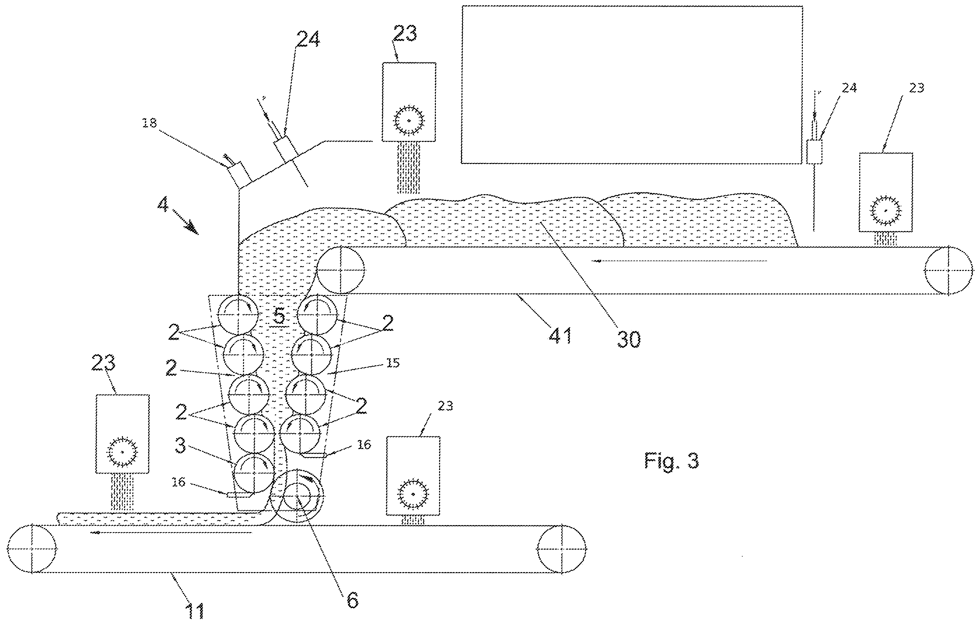

In Fig. 3 ist eine weitere erfindungsgemäße Ausführungsform der Vorrichtung 10 in einer schematischen Seitenansicht dargestellt. Die Vorrichtung 10 weist acht Formwalzen 2 auf, die jeweils in zwei Reihen zu jeweils vier Formwalzen 2 die Teigkammer 5 seitlich begrenzen bzw. in Bezug auf die Dicke des Teigbandes auf der gleichen Seite angeordnet sind. Die Formwalzen 2 liegen mit ihrem Umfang aneinander an und weisen die gleichen Durchmesser auf. Die beiden Reihen der Formwalzen 2 sind trichterförmig zueinander angeordnet, sodass sich jeweils der Abstand zischen den Achsen der jeweils auf gleicher Höhe in der Teigkammer 5 angeordneten Formwalzen 2 vom Eingang der Teigkammer 5 zum Ausgang hin verjüngt. Die Dicke des Teigbandes wird dann zwischen den letzten beiden Formwalzen 2, die ab nächsten zum Ausgang der Teigkammer 5 angeordnet sind vorgegeben. Das Teigband wird dann zwischen dem Umfang der Austragswalze 3 und der Schneidwalze 6 geführt und dort in eine Anzahl von Teigbandstreifen geschnitten und mittels eines Transportbandes oder einer Spreizvorrichtung in der die Teigbandstreifen voneinander getrennt werden aus der Vorrichtung 10 ausgebracht.

Um ein Ankleben der Teige 30, speziell klebriger Teige mit hohen Anteil an Wasser von den Transportbändern 41, Transportrollen, und Walzen zu verhindern können optional sogenannte Trennmittel verwendet werden. Die Trennmittel, Mehl, Wasser usw. können beispielsweise durch eine Anzahl von Bemehlungsvorrichtungen 23 und/oder eine Anzahl von Sprühelementen 24 aufgebracht werden. Die Bemehlungsvorrichtungen 23 sorgen auf den Bändern und den Oberflächen der Teigbänder für einen Mehlfilm, welcher an diesen anhaftet und das Teigband bzw. den Teig von den Teilen der Vorrichtung 10 trennt. In weitere Folge sind Abstreifer 16 an den letzten Teigbandformrollen angeordnet um evtl. Anhaftungen zu verhindern bzw. den Teig leichter von diesen abzuschaben oder zu lösen. Sind bei gewissen Teigen, z.b. glutenfreien Teigen, kein Trennmehl erwünscht kann mittels den Sprühelementen 24 ein Trennfilm aus Wasser oder Öl den Mehlfilm ersetzten.

Wie in Fig. 1 und Fig. 3 dargestellt kann die Vorrichtung 10 eine Anzahl vom Abstreifern 16 umfassen, die jeweils am Umfang einer oder mehrerer der Formwalzen 2, bei der in Fig. 3 gezeigten Ausführungsform jeweils in Förderrichtung des Teiges die letzten zwei Formwalzen 2, anliegen. Der Teig wird durch die Abstreifer 16 abgehoben bzw. etwaige Teigreste von den jeweiligen Walzen abgestreift. Auch erleichtert der Abstreifer 16 der Fig. 1, der am Umfang der Austragswalze 3 anliegt, das Ablösen der Teigbandstreifen nach dem Schnitt durch die Schneidwalze 6.

Wie in den Fig. 1 bis 3 dargestellt, kann das vorliegende Niveau des Teiges 30 in der Teigzufuhreinrichtung 4 bzw. dem Teigtrichter optional mittels eines Füllstandsensors 18 erfasst werden. Steigt das Niveau des Teiges zu hoch, kann die Teigzufuhrvorrichtung 4 angehalten werden und ein Rückstau und/oder eine ungewünschte Verformung bzw. Druckausübung auf den Teig 30 verhindert werden.

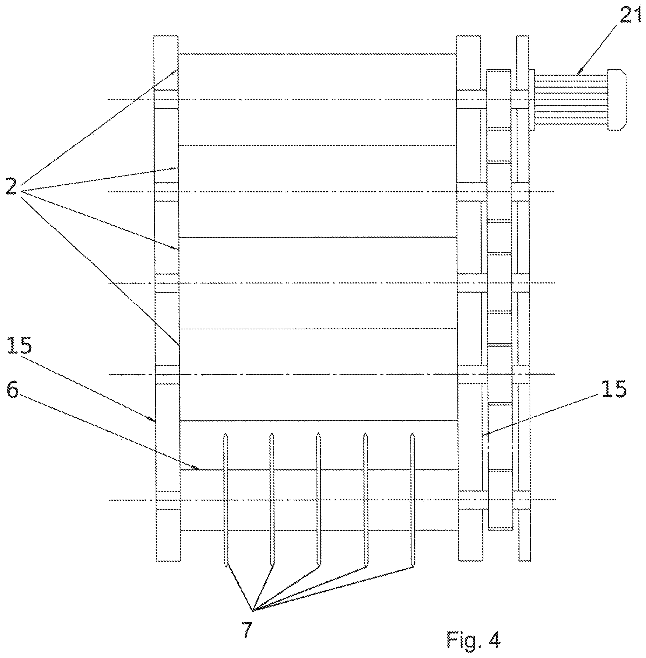

Fig. 4 zeigt eine Seitenansicht der Vorrichtung 10 gemäß Fig. 3 mit Ansicht auf den Umfang einer der Reihen der Formwalzen 2. Die Formwalzen 4 sind jeweils an den Stirnseiten in den Seitenabdeckungen 15 gelagert. Die Vorrichtung 10 weist weiters einen Antrieb 21 auf, der mit den Formwalzen 2 über Zahnräder verbunden ist. Die Formwalzen werden jeweils durch den Antrieb 21 gleichmäßig miteinander angetrieben, wobei die Zahnräder zwischen den Formwalzen 2 die Drehung an die jeweils nächste übertragen.

Die Schneidwalze 6 ist ebenfalls über ein Zahnrad mit den Formwalzen 2 bzw. dem Antrieb verbunden. Die Drehgeschwindigkeit der Formwalzen 2 der Austragswalze 3 und der Schneidwalze 6 kann gleich oder optional unterschiedlich sein. Die Schneidscheibe 6 weist 5 Schneidmesser 7 auf, die Scheibenförmig ausgebildet sind und sich bis zum Umfang der Austragswalze 3 (Fig. 3) erstrecken. Die Seitenabdeckungen 15 begrenzen die Teigkammer 5 seitlich und geben so die Breite des Teigbandes vor. Das Teigband wird bei der Ausführungsform der Fig. 3 und 4 in gleichmäßig breite Teigbandstreifen geschnitten, deren Breite durch den Abstand der Schneidmesser 7 zueinander den Seitenabdeckungen 15 vorgegeben wird.

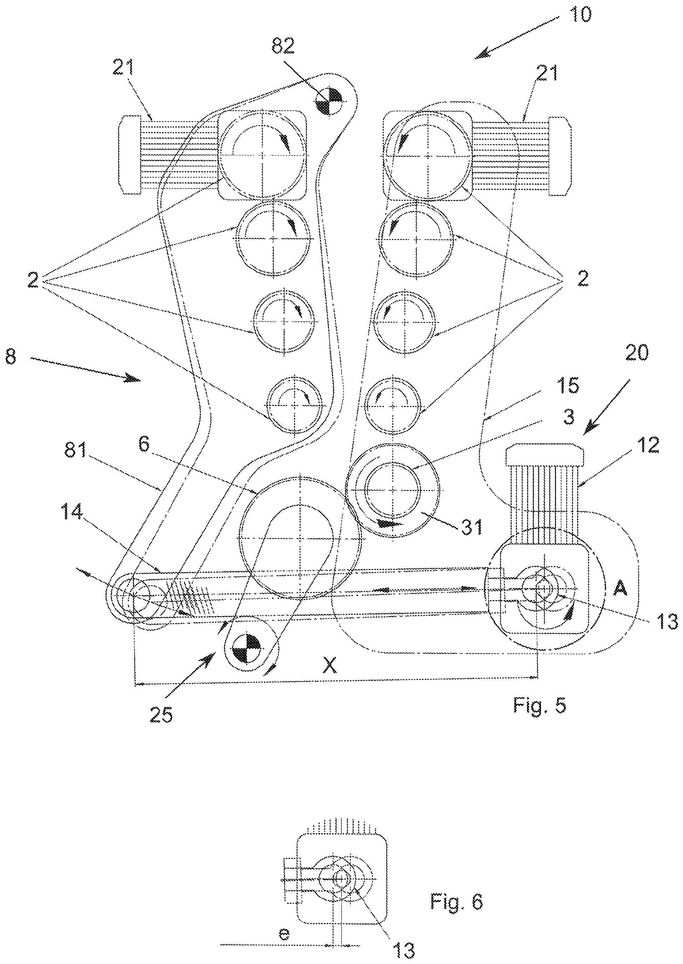

Fig. 5 zeigt eine weitere Ausführungsform der erfindungsgemäßen Vorrichtung 10 mit Ansicht auf die Stirnseiten der Walzen. Die Vorrichtung 10 weist acht Formwalzen 2 auf, die jeweils in zwei Reihen zu jeweils vier Formwalzen 2 die Teigkammer 5 seitlich begrenzen bzw. in Bezug auf die Dicke des Teigbandes auf der gleichen Seite angeordnet sind. Die Formwalzen 2 sind jeweils zu den benachbarten in einem Abstand angeordnet, sodass diese an ihrem Umfang beabstandet sind. Die Formwalzen 2 weisen unterschiedliche Durchmesser auf, wobei der Durchmesser der Formwalzen 2 vom Eingang der Teigkammer zum Ausgang der Teigkammer 5 hin abnimmt. Die beiden Reihen der Formwalzen 2 sind trichterförmig zueinander angeordnet, sodass sich jeweils der Abstand zischen den Achsen der jeweils auf gleicher Höhe in der Teigkammer 5 angeordneten Formwalzen 2 vom Eingang der Teigkammer 5 zum Ausgang hin verjüngt. Die Vorrichtung 10 weist zwei Antriebe 21 auf, die als Motoren ausgebildet sind auf. Die zwei Antriebe 21 treiben jeweils die Formwalzen 2 der jeweiligen Seite der Teigkammer 5 gemeinsam an. Die Austragswalze 3 ist als Gegenwalze für die Schneidwalze 6 ausgebildet, wobei die Schneidmesser 7 der Schneidwalze 6 sich bis zur Austragswalze 3 erstrecken. Die Schneidmesser 7 weisen eine größere Schnitttiefe als das geformte Teigband auf, sodass das Teigband zwischen der Austragswalze 3 und der Schneidwalze 6 keine Verformung erfährt.

Die Vorrichtung 10 weist eine Schwenkvorrichtung 8 auf, mit der die vier Formrollen 2, die auf einer Seite der Teigkammer 5 in Bezug auf die Dicke des Teigbandes gesehen auf der gleichen Seite angeordnet sind, in Richtung der Dicke des Teigbandes verschwenkbar bzw Verstellbar sind. Der Abstand der Achsen der Formwalzen 2, die mit der Schwenkvorrichtung 8 verbunden sind, wird dadurch zu den Achsen aller der anderen nicht mit der Schwenkvorrichtung 8 verbundenen Formwalze 2 verstellt. Dadurch ist die Dicke des Teigbandes veränderbar und vorgebbar.

Die Schwenkvorrichtung 8 weist zwei parallel in Richtung der Breite der Teigkammer 5 zueinander angeordnete Schwenkhebel 81 auf. An den Schwenkhebeln 81 sind die vier Formwalzen 2, die auf einer Seite der Teigkammer 5 in Bezug auf die Dicke des Teigbandes gesehen auf der gleichen Seite angeordnet sind, gelagert. Bei Verschwenken des Schwenkhebels 8 wird der Abstand der Achsen der Formwalzen 2, die in dem Schwenkhebel 81 gelagert sind zu den jeweils anderen nicht im Schwenkhebel 81 gelagerten, gemeinsam auf der anderen Seite der Teigkammer angeordneten, Formwalzen 2 verstellbar und/oder einstellbar.

Die Schwenkvorrichtung 8 weist weiters einen Schwenkantrieb 20 auf, der einen Elektromotor 12. Mit dem Elektromotor 12 ist ein Exzenter 13, mit einer definierten Exzentrizität e (Fig. 6), verbunden, der bei Betrieb des Motors 12 rotiert. Zwischen dem Exzenter 13 und dem Schwenkhebel 81 ist ein Stellelement, das als Hydraulikzylinder.,. 14 ausgebildet ist angeordnet. Der Hydraulikzylinder. 14 ist mit dem Ende des Kolbens an dem Exzenter 13 und mit dem anderen Ende bzw. dem Gehäuse an dem Schwenkhebel 81 verbunden. Wird der Exzenter 13 von dem Motor 12 angetrieben, wird der Schwenkhebel 81 über den Hydraulikzylinder. 14 um die Schwenkachse 82 oszillierend um einen vordefinierten Wert verschwenkt. Durch die oszillierende Verschwenkbewegung des Schwenkhebels 81 im Teigbandproduktionsprozess wird die Teigqualität des Teigbandes verbessert und die Qualität der Schnitte des Teigbandes zu Teigbandsträngen verbessert.

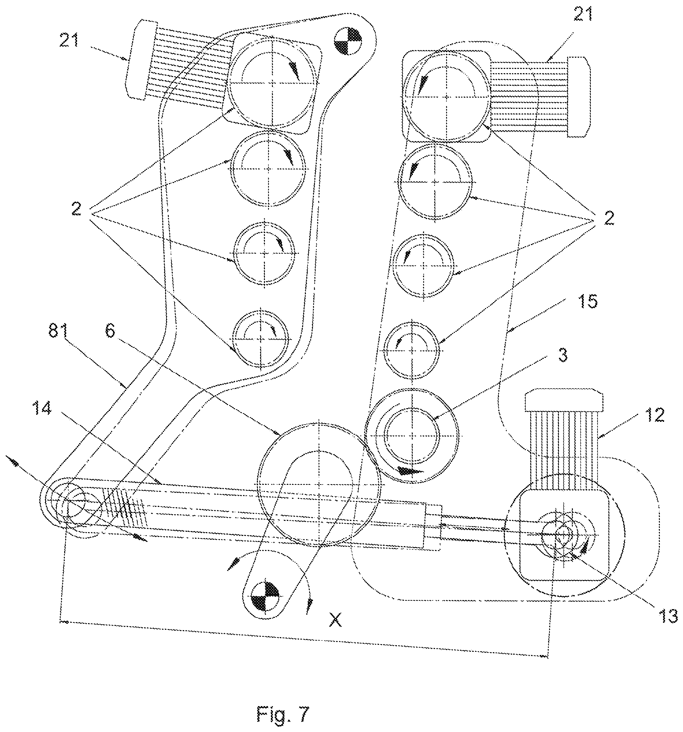

Optional kann, wie in den Fig. 5 und 7 dargestellt, das Stellmittel längenverstellbar ausgebildet sein. So ist der Hydraulikzylinder 14 durch anlegen eines Druckes, einer Spannung oder Steuersignale einfahrbar oder ausfahrbar wodurch dich der Abstand X und damit der Abstand der Achsen der an dem Schwenkhebel 81 befestigten Formwalzen 2 zu den nicht am Schwenkhebel 81 bzw. der Schwenkvorrichtung 8 befestigten Formwalzen 2 verändert. In Fig. 5 ist die Vorrichtung 10 mit kleinem Abstand X dargestellt und in Fig. 7 mit großem Abstand X. Bei Veränderung des Abstands X kann die Dicke des Teigbandes verändert werden oder die Vorrichtung 10 in eine Reinigungsposition gebracht werden in der die einzelnen Walzen und die Teigkammer 5 einfach zugänglich sind und so leicht gereinigt werden kann.

Alternativ kann das Stellelement anstatt als Hydraulikzylinder 14 auch als Linearelement, Spindelgetriebe etc. ausgebildet sein, wobei bei Verstellung der Linearelement, Spindelgetriebe etc. der Abstand der Achsen der Formwalzen veränderbar ist.

Die Schneidwalze 6 ist auf einer Verstellvorrichtung 25 angeordnet. Die Verstellvorrichtung 25 ist als um eine Achse verstellbarer Schwenkarm 26 ausgebildet mit dem der Abstand und/oder die Anpresskraft der Schneidwalze 6 an die Austragswalze 3 verstellbar ist.

Alternativ kann vorgesehen sein, dass der Schwenkantrieb 20 hydraulisch oder pneumatisch oder elektrisch oder elektromechanisch ausgebildet ist.

Optional kann die Austragswalze 3 oder die Schneidwalze 6 zwei Seitenwandungen 31 (Fig. 6) aufweisen, die jeweils im Bereich eines Endes der Austragswalze 3 und/oder der Schneidwalze 6 angeordnet sind. Die Seitenwandungen 31 ermöglichen beim Schnitt des Teigbandes mit der Schneidwalze 6 Verformungen und ein Ablenken des Teigbandes zu verhindern und ein sauberes Schnittbild zu bewirken.

Optional können die Formwalzen 2 und/oder die Austragswalze 3 und oder die Schneidwalze 6 eine unterschiedliche Profilierung aufweisen, wobei insbesondere die Formwalzen 3 einen profilierten Umfang aufweisen und die Austragswalze 3 und die Schneidwalze 6 glatt ausgebildet sind.

Optional kann vorgesehen sein, dass das Stellelement, insbesondere der Hydraulik- oder Pneumatikzylinder 14 oder die Linearelemente oder das Spindelgetriebe, eine Sensorik aufweist. Mittels der Sensorik wird dann die aktuelle Länge des Stellelements erfasst. Durch die Sensorik kann dann die Länge des Stellelements und damit die Dicke des Teigbandes anhand zuvor ermittelter oder eingegebenen Gewichte der Teiglinge eingestellt oder verändert werden.

## Patentansprüche

1. Vorrichtung (10) zum Formen mehrerer Teigbandstreifen umfassend eine Teigzufuhreinrichtung (4) mit der Teig (30) in die Vorrichtung (10) einbringbar ist, zumindest zwei um ihre Achsen drehbare Formwalzen (2), sowie zumindest eine um ihre Achse drehbare Austragswalze (3) und zumindest einen Antrieb (21) mit dem die Formwalzen (2) und/oder die Austragswalze (3) um Ihre Achsen antreibbar sind,
- wobei die Achsen der Formwalzen (2) und der Austragswalze (3), parallel in einem Abstand zueinander angeordnet sind und zwischen den Formwalzen (2) und der Austragswalze (3) eine Teigkammer (5) ausgebildet ist,
- wobei die Vorrichtung (10) zwei Seitenabdeckungen (15) aufweist, die die Teigkammer (5) seitlich, insbesondere an den Stirnseiten der Formwalzen (2) und der Austragswalze (3), begrenzen,
- wobei zwei der Formwalzen (2) derart im Bereich der Teigzufuhreinrichtung (4) in einem Abstand zueinander angeordnet sind, dass Teig (30) von der Teigzufuhreinrichtung (4) auf den Umfang der ersten Formwalze (2) aufbringbar und durch Drehung der der Teigzufuhreinrichtung (4) naheliegenden zwei Formwalzen (2) in die Teigkammer (5) einbringbar ist, und
- wobei die Vorrichtung (10) eine Teigabfuhrvorrichtung (11) aufweist, die der Austragswalze (3) nachgestellt ist und das geformte Teigband mittels der Teigabfuhrvorrichtung (11) aus der Vorrichtung (10) ausbringbar ist,
wobei die Vorrichtung (10) eine, insbesondere angetriebene, Schneidwalze (6) aufweist, die innerhalb der Teigkammer (5) angeordnet ist,
- wobei eine der Formwalzen (2) oder die Schneidwalze (6) mit der Austragswalze (3) derart in einem Abstand zueinander angeordnet sind, dass Teig (30) zwischen einer der Formwalzen (2) oder der Schneidwalze (6) und der Austragswalze (3) mit einer definierten Dicke, als geformtes Teigband ausbildbar ist,
- wobei die Schneidwalze (6) eine Anzahl von, insbesondere scheibenförmigen, Schneidmessern (7) umfasst, die sich bis zum Außenumfang der Austragswalze (3) erstrecken und wobei die Schneidwalze (6) mit der Austragswalze (3) im Bereich des Ausgangs der Teigkammer (5) derart angeordnet sind, dass die Schneidmesser (7) das in der Teigkammer (5) geformte Teigband entlang der Breite des Teigbandes in eine Anzahl von Teigbandstreifen teilt,
**dadurch gekennzeichnet, dass** die Vorrichtung (10) eine Schwenkvorrichtung (8) umfasst, wobei eine Anzahl der Formwalzen (2) die jeweils auf einer gemeinsamen Seite der Teigkammer (5) in Bezug auf die Dicke des Teigbandes gesehen auf der gleichen Seite angeordnet sind, und/oder die Austragswalze (3) mit der Schwenkvorrichtung (8) verbunden sind und mittels der Schwenkvorrichtung (8) in Richtung der Dicke des Teigbandes verschwenkbar sind, wobei der Abstand der Achsen der Formwalzen (2) und/oder der Austragswalze (3) die mit der Schwenkvorrichtung (8) verbunden sind zu den Achsen zumindest einer, der jeweils anderen nicht mit der Schwenkvorrichtung (8) verbundenen Formwalzen (2) und/oder der Austragswalze (3) verstellbar ist und derart die Dicke des Teigbandes veränderbar und/oder vorgebbar ist,
wobei die Schwenkvorrichtung (8) zumindest einen Schwenkhebel (81) umfasst, wobei der Schwenkhebel (81) um eine Schwenkachse (82) verschwenkbar ist, und wobei die Lagerung einer Anzahl der Formwalzen (2) die jeweils auf einer gemeinsamen Seite der Teigkammer (5) in Bezug auf die Dicke des Teigbandes gesehen auf der gleichen Seite angeordnet sind und/oder die Austragswalze (3) in dem Schwenkhebel (81), angeordnet sind, wobei bei Verschwenken des Schwenkhebels (81) der Abstand der Achsen der Formwalzen (2), die in dem Schwenkhebel (81) gelagert sind und/oder der Austragswalze (3) zu den jeweils anderen nicht im Schwenkhebel (81) gelagerten Formwalzen (2) verstellbar und/oder einstellbar ist,
die Schwenkvorrichtung (8), einen Schwenkantrieb (20) aufweist, wobei der Schwenkantrieb (20) derart angeordnet und ausgebildet ist, dass eine Anzahl der Formwalzen (2) und/oder die Austragswalze (3) in Richtung der Dicke des Teigbandes oszillierend um einen Nullpunkt antreibbar sind, sodass der Abstand der Achsen der Formwalzen (2) und/oder der Austragswalze (3) die von dem Schwenkantrieb (20) oszillierend bewegbar sind zu den Achsen zumindest einerder jeweils anderen, nicht durch den Schwenkantrieb (20) antreibbaren Formwalzen (2) und/oder zu der Achse der Austragswalze (3) im Teigproduktionsprozesses oszillierend um einen vorgegebenen Abstand verstellt werden,
wobei die Schwenkvorrichtung (8) ein Stellelement umfasst wobei der Schwenkantrieb (20) einen von einem Motor (12) angetriebenen Exzenter (13) aufweist, wobei das Stellelement an einem Ende mit dem Schwenkhebel (81) und mit dem anderen Ende mit dem Exzenter (13) verbunden ist, wobei der Schwenkhebel (81) bei Antrieb des Motors (12) durch den Exzenter (13) und das Stellelement oszillierend um einen Nullpunkt um die Schwenkachse (82) verschwenkbar ist.

2. Vorrichtung (10) nach Anspruch 1, **dadurch gekennzeichnet, dass** die Austragswalze (3) als Gegenwalze für die Schneidwalze (6) ausgebildet ist, wobei die Schneidmesser (7) der Schneidwalze (6) sich bis zur Austragswalze (3) erstrecken, wobei die Schneidmesser (7) insbesondere eine größere Schnitttiefe als das geformte Teigband aufweisen, sodass das Teigband zwischen der Austragswalze (3) und der Schneidwalze (6) keine Verformung erfährt.

3. Vorrichtung (10) nach einem der vorangehenden Ansprüche, **dadurch gekennzeichnet, dass** die Vorrichtung (10) eine Schwenkvorrichtung (8) umfasst, wobei alle Formwalzen (2), die jeweils auf einer gemeinsamen Seite der Teigkammer (5) in Bezug auf die Dicke des Teigbandes gesehen auf der gleichen Seite angeordnet sind, und/oder die Austragswalze (3) mit der Schwenkvorrichtung (8) verbunden sind und mittels der Schwenkvorrichtung (9) in Richtung der Dicke des Teigbandes verschwenkbar sind, wobei der Abstand der Achsen der Formwalzen (2) und/oder der Austragswalze (3) die mit der Schwenkvorrichtung (9) verbunden sind zu den Achsen zumindest einer, insbesondere aller, der jeweils anderen nicht mit der Schwenkvorrichtung (9) verbundenen Formwalze (2) und/oder der Austragswalze (3) verstellbar ist und derart die Dicke des Teigbandes veränderbar und/oder vorgebbar ist.

4. Vorrichtung (10) nach einem der vorangehenden Ansprüche, **dadurch gekennzeichnet, dass** die Schwenkvorrichtung (8) zwei parallel zueinander angeordneten Schwenkhebel (81), umfasst, wobei der Schwenkhebel (81) um die Schwenkachse (82), insbesondere mittels eines Hydraulik- oder Pneumatikzylinders oder elektromechanische Aktoren, verschwenkbar ist, und wobei die Lagerung einer Anzahl der Formwalzen (2), insbesondere aller Formwalzen (2), die jeweils auf einer gemeinsamen Seite der Teigkammer (5) in Bezug auf die Dicke des Teigbandes gesehen auf der gleichen Seite angeordnet sind, und/oder der Austragswalze (3) in den beiden Schwenkhebeln (81), angeordnet sind.

5. Vorrichtung (10) nach einem der vorangehenden Ansprüche, **dadurch gekennzeichnet, dass** die Schwenkvorrichtung (8), einen oder pneumatischen oder elektrischen oder elektromechanischen Schwenkantrieb (20) aufweist, wobei der Schwenkantrieb (20) derart angeordnet und ausgebildet ist, dass alle Formwalzen (2) die jeweils auf einer gemeinsamen Seite der Teigkammer (5) in Bezug auf die Dicke des Teigbandes gesehen auf der gleichen Seite angeordnet sind und/oder die Austragswalze (3) in Richtung der Dicke des Teigbandes oszillierend um einen Nullpunkt antreibbar sind, sodass der Abstand der Achsen der Formwalzen (2) und/oder der Austragswalze (3) die von dem Schwenkantrieb (20) oszillierend bewegbar sind zu den Achsen zumindest aller der jeweils anderen, nicht durch den Schwenkantrieb (20) antreibbaren Formwalzen (2) und/oder zu der Achse der Austragswalze (3) im Teigproduktionsprozesses oszillierend um einen vorgegebenen Abstand verstellt werden.

6. Vorrichtung (10) nach Anspruch 4 und 5, **dadurch gekennzeichnet, dass** die Schwenkvorrichtung (8) ein längenverstellbares Stellelement, insbesondere einen Hydraulik- oder Pneumatikzylinder (14) oder Linearelemente oder Spindelgetriebe, umfasst.

7. Vorrichtung (10) nach einem der vorangehenden Ansprüche, **dadurch gekennzeichnet, dass** die Schneidwalze (6) auf einer Verstellvorrichtung (25) angeordnet ist, wobei der Abstand und/oder die Anpresskraft der Schneidwalze (6) an die Austragswalze (3) mittels der Verstellvorrichtung (25) einstellbar ist, wobei die Verstellvorrichtung (25) insbesondere als um eine Achse verstellbarer Schwenkarm (26) ausgebildet ist an dem die Schneidwalze (6) angeordnet ist.

8. Vorrichtung (10) nach einem der vorangehenden Ansprüche, **dadurch gekennzeichnet, dass** die Austragswalze (3) und/oder die Schneidwalze (6) zwei Seitenwandungen (31) aufweist, die jeweils im Bereich des Endes der Austragswalze (3) und/oder der Schneidwalze (6) angeordnet sind, wobei die Seitenwandungen (31) derart angeordnet und ausgebildet sind, dass beim Schnitt des Teigbandes mit der Schneidwalze (6) Verformungen und ein Ablenken des Teigbandes verhindert wird.

9. Vorrichtung (10) nach einem der vorangehenden Ansprüche, **dadurch gekennzeichnet, dass** die Vorrichtung (10) eine Anzahl vom Abstreifern (16) umfasst, wobei die Abstreifer (16) jeweils am Umfang einer Formwalze (2) anliegen, wobei Teig (30) vom Umfang der jeweiligen Formwalze (2) mittels der Abstreifer (16) abhebbar ist.

10. Vorrichtung (10) nach einem der vorangehenden Ansprüche, **dadurch gekennzeichnet, dass** die Vorrichtung (10) eine Anzahl Bemehlungsvorrichtungen (23) und/oder eine Anzahl von Sprühelementen (24) umfasst, wobei Bemehlungsvorrichtungen (23) und/oder die Sprühelemente (24) derart in der Vorrichtung (10) angeordnet sind, dass ein Anhaften von Teig (30) an den mit Teig (30) in Kontakt befindlichen Oberflächen der Vorrichtung (10) verhinderbar ist.

11. Vorrichtung (10) nach einem der vorangehenden Ansprüche, **dadurch gekennzeichnet, dass** die Teigzufuhreinrichtung (4) einen Fülltrichter (41) und zumindest einen Füllstandssensor (18) umfasst, wobei der Füllstand der Teigzufuhreinrichtung (4), insbesondere des Fülltrichters, mittels des Füllstandsensors (18) erfassbar ist.

12. Vorrichtung (10) nach einem der vorangehenden Ansprüche, **dadurch gekennzeichnet, dass** die Vorrichtung (10) eine Anzahl von Antrieben (21) umfasst, wobei die Formwalzen (2) und/oder die Austragswalze (3) jeweils gemeinsam oder separat, vorzugsweise mit unterschiedlichen Drehzahlen, antreibbar sind,
oder dass die Vorrichtung (10) zwei Antriebe (21) umfasst, wobei jeweils die Formwalzen (2), die jeweils auf einer gemeinsamen Seite der Teigkammer (5) in Bezug auf die Dicke des Teigbandes gesehen auf der gleichen Seite angeordnet sind, jeweils mit einem der beiden Antriebe (21) gemeinsam angetrieben werden und insbesondere über Getriebe miteinander verbunden sind.

13. Vorrichtung (10) nach einem der vorangehenden Ansprüche, **dadurch gekennzeichnet, dass** die Formwalzen (2) und/oder die Austragswalze (3) und/oder die Schneidwalze (6) eine unterschiedliche Profilierung aufweisen, wobei insbesondere die Formwalzen (2) einen profilierten Umfang aufweisen und die Austragswalze (3) und die Schneidwalze (6) glatt ausgebildet sind.

14. Vorrichtung (10) nach einem der vorangehenden Ansprüche, **dadurch gekennzeichnet, dass** die Schneidwalze (6) auswechselbar an der Vorrichtung (10) angeordnet ist.

15. Vorrichtung (10) nach einem Ansprüche 6 bis 14, **dadurch gekennzeichnet, dass** das Stellelement, insbesondere der Hydraulik- oder Pneumatikzylinder (14) oder die Linearelemente oder das Spindelgetriebe, eine Sensorik aufweist, mit der die aktuelle Länge des Stellements erfassbar ist, wobei insbesondere durch die Sensorik die Länge des Stellelements und damit die Dicke des Teigbandes anhand zuvor ermittelter oder eingegebenen Gewichte der Teiglinge einstellbar ist.

## Claims

1. Device (10) for forming multiple dough band strips comprising a dough supply apparatus (4) through which dough (30) can be introduced into the device (10), at least two shaping rollers (2) which can be rotated about the axes thereof, and at least one discharge roller (3) which can be rotated about the axis thereof and at least one drive (21) through which the shaping rollers (2) and/or the discharge roller (3) can be driven about the axes thereof,
- wherein the axes of the shaping rollers (2) and the discharge roller (3) are arranged parallel with a spacing from each other and a dough chamber (5) is constructed between the shaping rollers (2) and the discharge roller (3),
- wherein the device (10) has two side covers (15) which delimit the dough chamber (5) laterally, in particular at the end faces of the shaping rollers (2) and the discharge roller (3),
- wherein two of the shaping rollers (2) are arranged in the region of the dough supply apparatus (4) with spacing from each other in such a manner that dough (30) can be applied by the dough supply apparatus (4) to the circumference of the first shaping roller (2) and, by rotating the two shaping rollers (2) which are located close to the dough supply apparatus (4), can be introduced into the dough chamber (5), and
- wherein the device (10) has a dough discharge device (11) which is arranged downstream of the discharge roller (3) and the shaped dough band can be discharged from the device (10) by means of the dough discharge device (11),
wherein the device (10) has an in particular driven cutting roller (6) which is arranged inside the dough chamber (5),
- wherein one of the shaping rollers (2) or the cutting roller (6) with the discharge roller (3) is/are arranged with such a spacing from each other that dough (30) can be formed between one of the shaping rollers (2) or the cutting roller (6) and the discharge roller (3) with a defined thickness as a shaped dough band,
- wherein the cutting roller (6) comprises a number of in particular disk-like cutting blades (7) which extend as far as the outer circumference of the discharge roller (3) and wherein the cutting roller (6) with the discharge roller (3) are arranged in the region of the outlet of the dough chamber (5) in such a manner that the cutting blade (7) divides the dough band which is formed in the dough chamber (5) along the width of the dough band into a number of dough band strips,
**characterized in that** the device (10) comprises a pivot device (8), wherein a number of the shaping rollers (2) which are arranged in each case at a common side of the dough chamber (5) at the same side when viewed with respect to the thickness of the dough band, and/or the discharge roller (3) is/are connected to the pivot device (8) and can be pivoted by means of the pivot device (8) in the direction of the thickness of the dough band, wherein the spacing of the axes of the shaping rollers (2) and/or the discharge roller (3) which are connected to the pivot device (8) can be adjusted with respect to the axes of at least one of the other shaping rollers (2) which are not connected to the pivot device (8) and/or the discharge roller (3) and the thickness of the dough band can thereby be changed and/or predetermined,
wherein the pivot device (8) comprises at least one pivot lever (81), wherein the pivot lever (81) can be pivoted about a pivot axis (82), and wherein the bearing of a number of the shaping rollers (2) which are arranged in each case at a common side of the dough chamber (5) at the same side when viewed with respect to the thickness of the dough band and/or the discharge roller (3) is/are arranged in the pivot lever (81), wherein, when the pivot lever (81) is pivoted, the spacing of the axes of the shaping rollers (2) which are supported in the pivot lever (81) and/or the discharge roller (3) with respect to the other shaping rollers (2) which are not supported in the pivot lever (81) can be adjusted and/or set,
the pivot device (8) has a pivot drive (20), wherein the pivot drive (20) is arranged and constructed in such a manner that a number of the shaping rollers (2) and/or the discharge roller (3) can be driven in the direction of the thickness of the dough band so as to oscillate about a zero point so that the spacing of the axes of the shaping rollers (2) and/or the discharge roller (3) which can be moved in an oscillating manner by the pivot drive (20) with respect to the axes of at least one of the other shaping rollers (2) which cannot be driven by the pivot drive (20) and/or are adjusted with respect to the axis of the discharge roller (3) in an oscillating manner by a predetermined spacing during the dough production process,
wherein the pivot device (8) comprises a positioning element, wherein the pivot drive (20) has a cam (13) which is driven by a motor (12), wherein the positioning element is connected at one end to the pivot lever (81) and at the other end to the cam (13), wherein the pivot lever (81) when the motor (12) is driven by the cam (13) and the positioning element can be pivoted in an oscillating manner about a zero point about the pivot axis (82),

2. Device (10) according to claim 1, **characterized in that** the discharge roller (3) is constructed as a counter-roller for the cutting roller (6), wherein the cutting blades (7) of the cutting roller (6) extend up to the discharge roller (3), wherein the cutting blades (7) in particular have a greater cutting depth than the shaped dough band so that the dough band is not subjected to any deformation between the discharge roller (3) and the cutting roller (6).

3. Device (10) according to any one of the preceding claims, **characterized in that** the device (10) comprises a pivot device (8), wherein all the shaping rollers (2) which are arranged in each case at a common side of the dough chamber (5) at the same side when viewed with respect to the thickness of the dough band, and/or the discharge roller (3) are connected to the pivot device (8) and can be pivoted by means of the pivot device (9) in the direction of the thickness of the dough band, wherein the spacing of the axes of the shaping rollers (2) and/or the discharge roller (3) which are connected to the pivot device (9) can be adjusted with respect to the axes of at least one, in particular all, of the other shaping rollers which are not connected to the pivot device (9) and/or the discharge roller (3) and the thickness of the dough band can be adjusted and/or predetermined in this manner.

4. Device (10) according to any one of the preceding claims, **characterized in that** the pivot device (8) comprises two pivot levers (81) which are arranged parallel with each other, wherein the pivot lever (81) can be pivoted about the pivot axis (82), in particular by means of a hydraulic or pneumatic cylinder or electromechanical actuators, and wherein the bearing of a number of the shaping rollers (2), in particular all of the shaping rollers (2) which are arranged in each case at a common side of the dough chamber (5) at the same side when viewed with respect to the thickness of the dough band, and/or the discharge roller (3) is/are arranged in the two pivot levers (81).

5. Device (10) according to any one of the preceding claims, **characterized in that** the pivot device (8) has a pneumatic or electrical or electromechanical pivot drive (20), wherein the pivot drive (20) is arranged and constructed in such a manner that all the shaping rollers (2) which are arranged in each case at a common side of the dough chamber (5) at the same side when viewed with respect to the thickness of the dough band and/or the discharge roller (3) can be driven in the direction of the thickness of the dough band in an oscillating manner about a zero point so that the spacing of the axes of the shaping rollers (2) and/or the discharge roller (3) which can be moved in an oscillating manner by the pivot drive (20) with respect to the axes of at least all of the other shaping rollers (2) which cannot be driven by the pivot drive (20) and/or are adjusted with respect to the axis of the discharge roller (3) in an oscillating manner by a predetermined spacing during the dough production process.

6. Device (10) according to claim 4 and 5, **characterized in that** the pivot device (8) comprises a longitudinally adjustable positioning element, in particular a hydraulic or pneumatic cylinder (14) or linear elements or spindle gears.

7. Device (10) according to any one of the preceding claims, **characterized in that** the cutting roller (6) is arranged on an adjustment device (25), wherein the spacing and/or the pressing force of the cutting roller (6) against the discharge roller (3) can be adjusted by means of the adjustment device (25), wherein the adjustment device (25) is in particular constructed as a pivot arm (26) which can be adjusted about an axis and on which the cutting roller (6) is arranged.

8. Device (10) according to any one of the preceding claims, **characterized in that** the discharge roller (3) and/or the cutting roller (6) has two side walls (31) which are each arranged in the region of the end of the discharge roller (3) and/or the cutting roller (6), wherein the side walls (31) are arranged and constructed in such a manner that during the cutting of the dough band with the cutting roller (6) deformations and a deflection of the dough band is prevented.

9. Device (10) according to any one of the preceding claims, **characterized in that** the device (10) comprises a number of scrapers (16), wherein the scrapers (16) bear in each case on the circumference of a shaping roller (2), wherein dough (30) can be lifted from the circumference of the respective shaping roller (2) by means of the scraper (16).

10. Device (10) according to any one of the preceding claims, **characterized in that** the device (10) comprises a number of flour-applying devices (23) and/or a number of spray elements (24), wherein flour-applying devices (23) and/or the spray elements (24) are arranged in the device (10) in such a manner that dough (30) can be prevented from sticking to the surfaces of the device (10) which are in contact with dough (30).

11. Device (10) according to any one of the preceding claims, **characterized in that** the dough supply apparatus (4) comprises a filling funnel (41) and at least one filling level sensor (18), wherein the filling level of the dough supply apparatus (4), in particular of the filling funnel, can be detected by means of the filling level sensor (18).

12. Device (10) according to any one of the preceding claims, **characterized in that** the device (10) comprises a number of drives (21), wherein the shaping rollers (2) and/or the discharge roller (3) can each be driven together or separately, preferably at different speeds,
or **in that** the device (10) comprises two drives (21), wherein in each case the shaping rollers (2) which are arranged in each case at a common side of the dough chamber (5) at the same side when viewed with respect to the thickness of the dough band, are driven together with one of the two drives (21) and in particular are connected to each other by means of gear mechanisms.

13. Device (10) according to any one of the preceding claims, **characterized in that** the shaping rollers (2) and/or the discharge roller (3) and/or the cutting roller (6) have a different profiling, wherein in particular the shaping rollers (2) have a profiled circumference and the discharge roller (3) and the cutting roller (6) are constructed to be smooth.

14. Device (10) according to any one of the preceding claims, **characterized in that** the cutting roller (6) is replaceably arranged on the device (10).

15. Device (10) according to any one of claims 6 to 14, **characterized in that** the positioning element, in particular the hydraulic or pneumatic cylinder (14) or the linear elements or the spindle gear, has a sensor mechanism through which the current length of the positioning element can be detected, wherein, in particular as a result of the sensor mechanism, the length of the positioning element and consequently the thickness of the dough band can be adjusted with reference to previously established or input weights of the pieces of dough.

## Revendications

1. Dispositif (10) de moulage de plusieurs bandes de pâte comprenant un système d'alimentation en pâte (4), avec lequel de la pâte (30) peut être introduite dans le dispositif (10), au moins deux rouleaux de moulage (2) rotatifs autour de leurs axes, ainsi qu'au moins un rouleau de sortie (3) rotatif autour de son axe et au moins un entraînement (21), avec lequel les rouleaux de moulage (2) et/ou le rouleau de sortie (3) peuvent être entraînés autour de leurs axes,
- dans lequel les axes des rouleaux de moulage (2) et du rouleau de sortie (3) sont agencés parallèlement à une distance les uns par rapport aux autres et une chambre de pâte (5) est formée entre les rouleaux de moulage (2) et le rouleau de sortie (3),
- dans lequel le dispositif (10) présente deux recouvrements latéraux (15) qui délimitent la chambre de pâte (5) latéralement, en particulier sur les côtés avant des rouleaux de moulage (2) et du cylindre de sortie (3),
- dans lequel deux des rouleaux de moulage (2) sont agencés dans la zone du système d'alimentation en pâte (4) à une distance l'un par rapport à l'autre de telle manière que la pâte (30) puissent être appliquée par le dispositif d'alimentation en pâte (4) sur la périphérie du premier rouleau de moulage (2) et puisse être introduite par rotation des deux rouleaux de moulage (2) se trouvant proche du système d'alimentation en pâte (4) dans la chambre de pâte (5), et
- dans lequel le dispositif (10) présente un dispositif d'évacuation de pâte (11) qui est placé après le rouleau de sortie (3) et le ruban de pâte moulé peut être sorti du dispositif (10) au moyen du dispositif d'évacuation de pâte (11),
dans lequel le dispositif (10) présente un rouleau de coupe (6) entraîné en particulier, qui est agencé dans la chambre de pâte (5),
- dans lequel l'un des rouleaux de moulage (2) ou le rouleau de coupe (6) avec le rouleau de sortie (3) sont agencés à une distance les uns par rapport aux autres de telle manière que de la pâte (30) puisse être formée entre l'un des rouleaux de moulage (2) ou le rouleau de coupe (6) et le rouleau de sortie (3) avec une épaisseur définie, comme ruban de pâte,
- dans lequel le rouleau de coupe (6) comprend un nombre de lames de coupe (7) en particulier en forme de disque qui s'étendent jusqu'à la périphérie extérieure du rouleau de sortie (3) et dans lequel le rouleau de coupe (6) avec le rouleau de sortie (3) est agencé dans la zone de la sortie de la chambre de pâte (5) de telle manière que les lames de coupe (7) divise le ruban de pâte moulé dans la chambre de pâte (5) le long de la largeur du ruban de pâte en un nombre de bandes de pâte,
**caractérisé en ce que** le dispositif (10) comprend un dispositif de pivotement (8), dans lequel un nombre de rouleaux de moulage (2) qui sont agencés respectivement sur un côté commun de la chambre de pâte (5) par rapport à l'épaisseur du ruban de pâte vu sur le même côté, et/ou le rouleau de sortie (3) est relié au dispositif de pivotement (8) et est pivotant au moyen du dispositif de pivotement (8) en direction de l'épaisseur du ruban de pâte, dans lequel la distance des axes des rouleaux de moulage (2) et/ou du rouleau de sortie (3) qui sont reliés au dispositif de pivotement (8), peut être ajustée par rapport aux axes au moins d'un des autres rouleaux de moulage (2) respectivement non reliés au dispositif de pivotement (8) et/ou du rouleau de sortie (3) et l'épaisseur du ruban de pâte peut être modifiée et/ou prédéfinie de la sorte,
dans lequel le dispositif de pivotement (8) comprend au moins un levier de pivotement (81), dans lequel le levier de pivotement (81) peut être pivoté autour d'un axe de pivotement (82), et dans lequel le logement d'un nombre des rouleaux de moulage (2) qui sont agencés respectivement sur un côté commun de la chambre de pâte (5) par rapport à l'épaisseur de la bande de pâte vu sur le même côté et/ou le rouleau de sortie (3) est agencé dans le levier de pivotement (81), dans lequel lors du pivotement du levier de pivotement (81), la distance des axes des rouleaux de moulage (2) qui sont logés dans le levier de pivotement (81) et/ou du rouleau de sortie (3) peut être déplacée et/ou ajustée par rapport aux autres rouleaux de moulage (2) respectivement non logés dans le levier de pivotement (81),
le dispositif de pivotement (8) présente un entraînement de pivotement (20), dans lequel l'entraînement de pivotement (20) est agencé et formé de telle manière qu'un nombre de rouleaux de moulage (2) et/ou le rouleau de sortie (3) puisse être entraîné en direction de l'épaisseur du ruban de pâte de manière oscillante autour d'un point zéro de sorte que la distance des axes des rouleaux de moulage (2) et/ou du rouleau de sortie (3) qui sont mobiles de manière oscillante par l'entraînement de pivotement (20) soit déplacée par rapport aux axes au moins d'un des autres rouleaux de moulage (2) respectivement non entraînables par l'entraînement de pivotement (20) et/ou par rapport à l'axe du rouleau de sortie (3) dans le processus de production de pâte de manière oscillante d'une distance prédéfinie,
dans lequel le dispositif de pivotement (8) comprend un élément de réglage, dans lequel l'entraînement de pivotement (20) présente une excentrique (13) entraînée par un moteur (12), dans lequel l'élément de réglage est relié à une extrémité au levier de pivotement (81) et à l'autre extrémité à l'excentrique (13), dans lequel le levier de pivotement (81) peut être pivoté lors de l'entraînement du moteur (12) par l'excentrique (13) et l'élément de réglage de manière oscillante autour d'un point nul autour de l'axe de pivotement (82).

2. Dispositif (10) selon la revendication 1, **caractérisé en ce que** le rouleau de sortie (3) est formé comme contre-rouleau pour le rouleau de coupe (6), dans lequel les lames de coupe (7) du rouleau de coupe (6) s'étendent jusqu'au rouleau de sortie (3), dans lequel les lames de coupe (7) présentent en particulier une plus grande profondeur de coupe que le ruban de pâte moulé de sorte que le ruban de pâte entre le rouleau de sortie (3) et le rouleau de coupe (6) ne subisse aucune déformation.

3. Dispositif (10) selon l'une quelconque des revendications précédentes, **caractérisé en ce que** le dispositif (10) comprend un dispositif de pivotement (8), dans lequel tous les rouleaux de moulage (2) qui sont agencés respectivement sur un côté commun de la chambre de pâte (5) vu par rapport à l'épaisseur du ruban de pâte sur le même côté et/ou le rouleau de sortie (3) est relié au dispositif de pivotement (8) et est pivotant au moyen du dispositif de pivotement (9) en direction de l'épaisseur du ruban de pâte, dans lequel la distance des axes des rouleaux de moulage (2) et/ou du rouleau de sortie (3) qui sont reliés au dispositif de pivotement (9), est déplaçable par rapport aux axes au moins d'un, en particulier de tous, des autres rouleaux de moulage (2) respectivement non reliés au dispositif de pivotement (9) et/ou du rouleau de sortie (3) et l'épaisseur du ruban de pâte peut être modifiée et/ou prédéfinie de la sorte.

4. Dispositif (10) selon l'une quelconque des revendications précédentes, **caractérisé en ce que** le dispositif de pivotement (8) comprend deux leviers de pivotement (81) agencés parallèlement l'un à l'autre, dans lequel le levier de pivotement (81) peut être pivoté autour de l'axe de pivotement (82), en particulier au moyen d'un cylindre hydraulique ou pneumatique ou des actionneurs électromécaniques, et dans lequel le logement d'un nombre de rouleaux de moulage (2), en particulier de tous les rouleaux de moulage (2) qui sont agencés respectivement sur un côté commun de la chambre de pâte (5) vu par rapport à l'épaisseur du ruban de pâte sur le même côté, et/ou du rouleau de sortie (3) est agencé dans les deux leviers de pivotement (81).

5. Dispositif (10) selon l'une quelconque des revendications précédentes, **caractérisé en ce que** le dispositif de pivotement (8) présente un entraînement pneumatique ou électrique ou électromécanique (20), dans lequel l'entraînement de pivotement est agencé et formé de telle manière que tous les rouleaux de moulage (2) soient agencés respectivement sur un côté commun de la chambre de pâte (5) vu par rapport à l'épaisseur du ruban de pâte sur le même côté et/ou le rouleau de sortie (3) soit entraînable en direction de l'épaisseur du ruban de pâte de manière oscillante autour d'un point zéro de sorte que la distance entre les axes des rouleaux de moulage (2) et/ou du rouleau de sortie (3) qui est mobile de manière oscillante par l'entraînement de pivotement (20), soit déplacée par rapport aux axes au moins de tous des autres rouleaux de moulage (2) respectivement non entraînables par l'entraînement de pivotement (20) et/ou par rapport à l'axe du rouleau de sortie (3) dans le processus de production de pâte de manière oscillante d'une distance prédéfinie.

6. Dispositif (10) selon les revendications 4 et 5, **caractérisé en ce que** le dispositif de pivotement (8) comprend un élément de réglage réglable en longueur, en particulier un cylindre hydraulique ou pneumatique (14) ou des éléments linéaires ou engrenage à tige.

7. Dispositif (10) selon l'une quelconque des revendications précédentes, **caractérisé en ce que** le rouleau de coupe (6) est agencé sur un dispositif de réglage (25), dans lequel la distance et/ou la force de pressage du rouleau de coupe (6) au niveau du rouleau de sortie (3) est réglable au moyen du dispositif de réglage (25), dans lequel le dispositif de réglage (25) est formé en particulier comme un bras de pivotement (26) déplaçable autour d'un axe, au niveau duquel le rouleau de coupe (6) est agencé.

8. Dispositif (10) selon l'une quelconque des revendications précédentes, **caractérisé en ce que** le rouleau de sortie (3) et/ou le rouleau de coupe (6) présente deux parois latérales (31) qui sont agencées respectivement dans la zone de l'extrémité du rouleau de sortie (3) et/ou du rouleau de coupe (6), dans lequel les parois latérales (31) sont agencées et formées de telle manière que lors de la coupe du ruban de pâte avec le rouleau de coupe (6), des déformations et une déviation du ruban de pâte soient empêchées.

9. Dispositif (10) selon l'une quelconque des revendications précédentes, **caractérisé en ce que** le dispositif (10) comprend un nombre de racloirs (16), dans lequel les racloirs (16) reposent respectivement contre la périphérie d'un rouleau de moulage (2), dans lequel de la pâte (30) peut être retirée de la périphérie du rouleau de moulage (2) respectif au moyen des racloirs (16).

10. Dispositif (10) selon l'une quelconque des revendications précédentes, **caractérisé en ce que** le dispositif (10) comprend un nombre de dispositifs de farinage (23) et/ou un nombre d'éléments de pulvérisation (24), dans lequel des dispositifs de farinage (23) et/ou les éléments de pulvérisation (24) sont agencés dans le dispositif (10) de telle manière qu'une adhérence de pâte (30) sur les surfaces se trouvant en contact avec la pâte (30) du dispositif (10) puisse être empêchée.

11. Dispositif (10) selon l'une quelconque des revendications précédentes, **caractérisé en ce que** le système d'alimentation en pâte (4) comprend un entonnoir de remplissage (41) et au moins un capteur de niveau de remplissage (18), dans lequel le niveau de remplissage du système d'alimentation en pâte (4), en particulier de l'entonnoir de remplissage, peut être détecté au moyen du capteur de niveau de remplissage (18).

12. Dispositif (10) selon l'une quelconque des revendications précédentes, **caractérisé en ce que** le dispositif (10) comprend un nombre d'entraînements (21), dans lequel les rouleaux de moulage (2) et/ou le rouleau de sortie (3) peuvent être entraînés respectivement ensemble ou séparément, de préférence à différentes vitesses de rotation,
ou **en ce que** le dispositif (10) comprend deux entraînements (21), dans lequel respectivement les rouleaux de moulage (2) qui sont agencés respectivement sur un côté commun de la chambre de pâte (5) vu par rapport à l'épaisseur du ruban de pâte sur le même côté, sont entraînés respectivement avec l'un des deux entraînements (21) ensemble et sont reliés entre eux en particulier par un engrenage.

13. Dispositif (10) selon l'une quelconque des revendications précédentes, **caractérisé en ce que** les rouleaux de moulage (2) et/ou le rouleau de sortie (3) et/ou le rouleau de coupe (6) présentent un profilage différent, dans lequel en particulier les rouleaux de moulage (2) présentent une périphérie profilée et le rouleau de sortie (3) et le rouleau de coupe (6) sont formés de manière lisse.

14. Dispositif (10) selon l'une quelconque des revendications précédentes, **caractérisé en ce que** le rouleau de coupe (6) est agencé de manière interchangeable sur le dispositif (10).

15. Dispositif (10) selon l'une quelconque des revendications 6 à 14, **caractérisé en ce que** l'élément de réglage, en particulier le cylindre hydraulique ou pneumatique (14) ou les éléments linéaires ou l'engrenage à tige présente un capteur, avec lequel la longueur actuelle de l'élément de réglage peut être détectée, dans lequel en particulier par le capteur, la longueur de l'élément de réglage et ainsi l'épaisseur du ruban de pâte est réglable à l'aide de poids précédemment déterminés ou entrés des pâtons.
